# EUROPEAN PATENT APPLICATION

(11) **EP 4 653 245 A1**
(43) Date of publication of application: **26.11.2025**
(21) Application number: 25177708.2
(22) Date of filing: 20.05.2025
(51) Int. Cl.: B60L 53/10, B60L 53/14, B60L 53/30, B60L 53/63, B60L 53/65, B60L 53/67

(54) **ELECTRIC POWER DISTRIBUTION DEVICE**

(30) Priority: 21.05.2024 NL 2037727
(71) Applicant: E.C.S. Electronics B.V., 4825 AR Breda (NL)
(72) Inventor: Barth, Raymond Peter Johannes, Breda (NL); Guarino, Antonio, Breda (NL); Renfurm, Bryan Harvey Maria, Breda (NL)
(74) Representative: Custos IPC Coöperatie U.A.

(57) **Abstract**

An electric power distribution device (11) for selectively distributing electric power to multiple electric vehicles. The device (11) comprises a power inlet (60) arranged for receiving electric power from a charging station (10), multiple power outlets (64,65), each of the outlets being arranged for providing electric power to one of multiple electric vehicles (13,15), and a controlling system (40). The controlling system is arranged to detect how many electric vehicles are connected to the multiple power outlets, receive priority input data defining at least the one electric vehicle with the highest priority. If only one electric vehicle is connected, select the only one connected electric vehicle. If multiple electric vehicles are connected, select the one electric vehicle with the highest priority. The controlling system will control the electric power distribution device (11) to initiate charging of the selected electric vehicle.

## Description

### Field of the invention

The present invention relates to an electric power distribution device. The distribution device is arranged to distribute electric power from a charging station to multiple electric vehicles. The invention also relates to a method of controlling an electric power distribution device for selectively distributing electric power to multiple electric vehicles, and to a computer program product.

### Background art

Slowly, but gradually, electronic vehicles (EVs) are taking over from the combustion engine vehicles. To charge their electronic vehicle, already many owners have installed their own charging station, also called an Electric Vehicle Supply Equipment (EVSE). Such an EVSE has a single charging port for connecting a charging cable. A charging cable has a charging handle at its other end, whose connectors can be inserted into a vehicle inlet for delivering electric power from the premises wiring to the electric vehicle.

Patent publication EP3025901 B1 discloses an EVSE add-on adapter that plugs into a single charging port and provides two charging cables to double the number of EVs that may be simultaneously charged in a power sharing mode. As such, the add-on adapter is an electric power distribution device. When the add-on adapter is initially plugged into the charging port of a typical EVSE, or after a short delay, the add-on adapter connects a circuit that lowers the impedance between the control pilot signal line and ground for a positive voltage on the control pilot signal. The add-on adapter thereby simulates the interaction between an EVSE and EV. The EVSE responds by signalling to the add-on adapter over the control pilot signal line, to indicate the maximum available current that the EVSE is capable of providing to the add-on adapter. The circuit connected by the add-on adapter between control pilot and ground, results in a control pilot signal voltage that is detected by the EVSE and causes the EVSE to close its contactor and connect the add-on adapter to the line voltages. The add-on adapter stores the value of the maximum available current, as provided by the EVSE on the control pilot signal, which will be shared if there is more than one EV that needs to be charged.

When a user plugs a charging handle of one of the add-on adapter's two charging cables into an EV's charging inlet, the EV closes the circuit between the control pilot signal line and the ground line, with a specific impedance. Closing the circuit between a control pilot signal line and ground with this impedance, indicates that an EV is connected, but is not ready to accept energy. When only one EV is connected at any given time to the add-on adapter, the add-on adapter is able to offer to that EV the maximum available current that the EVSE will deliver to the add-on adapter (or the maximum current as limited by the capacity of the adapter design, whichever is less). The add-on adapter then signals to the EV, using the control pilot signal line, the amount of available charging current. The EV then responds by closing the circuit between the control pilot signal line and the ground line with a different specific impedance, indicating that the EV is ready to accept energy. The add-on adapter then closes a contactor or relay associated with the handle connected to the EV, allowing the EV to begin charging.

With one EV connected to the adapter and charging, when a user plugs the charging handle of the second cable of the add-on adapter into a second EV's charging inlet, the second EV closes the circuit between the second control pilot signal line and the second ground line, with a specific impedance. Closing the circuit between the second control pilot signal line and ground with this impedance indicates that a second EV is connected but is not ready to accept energy.

When there are two EVs simultaneously connected to the add-on adapter and requesting charge, the add-on adapter will determine a modified available charging rate to be offered to both the first and the second EVs, since they must share the available capacity determined by the limit of the upstream EVSE or the add-on adapter. The add-on adapter includes a charge sharing control circuit that is configured to dynamically determine modified available charging rates to be offered for simultaneously charging two EVs. For example, the charge sharing control circuit in the distribution device may dynamically determine that the modified available charging rates to be offered to two respective EVs is half of the available charging rate offered by the upstream EVSE. In this case, the distribution device would offer to each EV, over its respective control pilot signal line, a modified available charging rate equal to half of the charging rate offered by the upstream EVSE.

Although sharing the available charging power seams fair and appropriate, it will require more charging time as compared to charging only a single vehicle. If a user wants one of the vehicles to be sufficiently charged before a certain deadline, she may want to minimize the charging time so as to be sure that the charging is completed before the deadline. Using the known solution described above, she will need to unplug the other vehicle, in order to speed up the charging of her own vehicle. Unplugging cables may be inconvenient, especially during the night times, or when the vehicles are parked far away.

### Summary of the invention

The aim of the present invention is to provide an alternative electronic power distribution device that solves at least one of the disadvantages of the known device described above. According to a first aspect of the present invention, there is provided an electric power distribution device for selectively distributing electric power to multiple electric vehicles, the device comprising a power inlet arranged for receiving electric power from a charging station, wherein the charging station is arranged for charging an electric vehicle that is connected thereto. The device further comprises multiple power outlets, each of the outlets being arranged for providing electric power to one of multiple electric vehicles. The power distribution system comprises a controlling system and a communication system arranged to receive instructions from a remote device, in particular user-defined priority data comprising information on the sequence of charging the multiple electric vehicles, and defining one electric vehicle with the highest priority, wherein the communication system is operatively connected to the controlling system for providing the instructions to the controlling system.

The electric power distribution device further comprises a switching system arranged to switch power coming from the power inlet to one of the multiple power outlets.

The controlling system is arranged to detect how many electric vehicles are connected to the multiple power outlets. The controlling system is arranged to receive the user-defined priority data from the communication device. If only one electric vehicle is connected, the controlling system will select the only one connected electric vehicle. If multiple electric vehicles are connected, the controlling system selects the one electric vehicle with the highest priority. Then the controlling system will control the switching system to connect the power inlet to that one of the power outlets that is connected to the selected electric vehicle, and send a charging signal to the charging station so as to initiate the charging of the selected electric vehicle.

In this solution, the electric power distribution device may charge two vehicles one after the other (sequentially), whereby the stated priorities may be changed by a user. It is noted that power distribution devices that charge vehicles sequentially are known as such. However, the applicant has recognized that, in some circumstances, the users might want to change the sequence of the charging. This is done according to the invention by giving priority to the vehicle that needs to be charged first.

The communication system may be a wireless communication system arranged to communicate to the user via a mobile network or any other suitable communication network. The remote device may be a mobile phone, or a computer, or any other suitable device located remotely from the distribution device. By being able to directly communicate with the user, the distribution device is not dependent on the communication capabilities of the charging system, and also the charging system does not need any adjustments for using the distribution device as an add-on.

In an embodiment, the controlling system is arranged to control the switching system to switch the charging to the selected electric vehicle in case a currently charging electric vehicle is not the selected electric vehicle. By switching to the selected electric vehicle, which is the one with the highest priority according to the priority data, the user causes the device to immediately start charging the selected electric vehicle, while charging of the other electric vehicle(s) is stopped. This will minimize the charging time for the selected electric vehicle.

In an embodiment, the controlling system is arranged to, before the charging is switched to the selected electric vehicle, initiate the sending of a control pilot signal to the charging station. This control pilot signal may indicate to the charging station that the currently charging electric vehicle is completely or sufficiently charged. As a consequence, the charging station will stop charging, and the distribution device will be able to switch its current switches appropriately with no voltage applied to the inputs of the switches. In this way, the risk of electrical sparks during switching is nearly zero. This will result in a longer lifetime of the device.

In an embodiment, the controlling system is arranged for, once the electrical vehicle with the highest priority is sufficiently or completely charged, selecting the one electrical vehicle with the second highest priority and control the electric power distribution device to initiate charging of the selected electric vehicle. Information on the sequence of charging is particularly useful if more than two vehicles are connected to the distribution device, so for example car A, car B and car C. The user, or users, may for example define a sequence like A,B,C and may later on change the sequence to B,A,C. If the change in priority is changed during charging of car A, the device will switch the charging to car B. Once car B is fully or sufficiently charged, car A is charged further. And next car C will be charged.

In an embodiment, an electric vehicle is always charged at full power, i.e. the power level received from the charging station. Using the maximum power level available at the power point (i.e. power station), the distribution device enables the fastest charging of the vehicle. This results in the shortest charging time.

In an embodiment, the electronic power distribution device further comprises:
- a control pilot unit arranged to receive a control pilot signal from the charging station and communicate the control pilot signal to the controlling system, and
- multiple control pilot generators each being arranged to communicate with the controlling system and to receive the control pilot signal from the controlling system and to continuously send a copy of the control pilot signal to the connected electric vehicle.

By continuously sending a CP signal to all connected vehicles, also a vehicle which is not charging will stay alert, and will wait to be charged. In this way no connected vehicle will go into sleep mode.

In an embodiment, each of the multiple control pilot generators is arranged to detect a modification of the CP signal modified by the connected vehicle that is charging, the modification being an indication of the vehicle needing normal charging or forced cooling charging, wherein the modification is communicated back to the charging station by the controlling system and the control pilot unit.

By communication back the modified CP signal to the charging station, each vehicle will correctly be charged depending on the requested charge type such as 'normal charging' or 'charging with forced cooling'. For example, if relatively low voltage (e.g. 3V) is detected by the control pilot generator(s), this value is sent back to the charging station which will output a proper electric power for a vehicle with forced cooling. A relative high voltage (e.g. 6V) will indicate a normal charging.

In an embodiment, the controlling system is arranged to control the electric power distribution device to initiate the charging only if one or more out of a set of conditions are met, the set of conditions comprising:
- a charging request has been received from a user;
- the device is connected to the charging station;
- the selected, electric vehicle is connected to the device;
- the connected electric vehicle is not completely or sufficiently charged.

In an embodiment, the electronic power distribution device comprises a memory, wherein the controlling system is arranged to let the device charge the selected electric vehicle, for a specific time period using a counter, and store a value of the counter into the memory if the received priority data indicates that another electric vehicle needs to be charged first. This stored value can then be used to complete the charging of the selected electric vehicle, once the electric vehicle with the highest priority has been charged completely or sufficiently.

The invention also relates to an electric vehicle power system comprising an electric power distribution device as described above, a communication network and a user input device, such as a mobile phone, wherein the communication system is arranged to receive the instructions from the input device via the communication network. The input device may be configured to load a software program arranged to set the wanted user-defined priorities. This may be done for two or more cars. In an embodiment, the software program may be arranged to define a loading schedule for a car park having multiple company cars that each will be charged according to a loading schedule.

The invention also relates to a method of controlling an electric power distribution device for selectively distributing electric power to multiple electric vehicles, the device comprising a power inlet arranged for receiving electric power from a charging station (10), multiple power outlets, each of the outlets being arranged for providing electric power to one of multiple electric vehicles, a controlling system, and a communication system arranged to receive instructions from a remote device, in particular user-defined priority data comprising information on the sequence of charging the multiple electric vehicles, and defining one electric vehicle with the highest priority, wherein said communication system is operatively connected to the controlling system for providing the instructions to the controlling system and a switching system arranged to switch power coming from the power inlet to one of the multiple power outlets, the method comprising:
- detecting how many electric vehicles are connected to the multiple power outlets;
- receiving the user-defined priority data from the communicating system;
- if only one electric vehicle is connected, selecting the only one connected electric vehicle;
- if multiple electric vehicles are connected, selecting the one electric vehicle with the highest priority;
- controlling the switching system to connect the power inlet to that one of the power outlets that is connected to the selected electric vehicle, and
- sending a charging signal to the charging station so as to initiate charging of the selected electric vehicle.

The invention also relates to a computer program product comprising instructions configured to, when loaded on processing units of a controlling system, perform the method as described above.

### Brief description of the drawings

These and other aspects of the invention are apparent from and will be elucidated with reference to the embodiments described hereinafter. In the drawings,
Figure 1 schematically shows a charging system connected to an electric power distribution device 11 according to an embodiment of the invention;
Figure 2 shows a scheme of the charging system and the electric power distribution device coupled to two cars;
Figure 3 is a flow chart of a known method of charging an electric vehicle executed by an EVSE according to the state of the art;
Figure 4 is a flow chart of a method of distributing electric power according to an embodiment;
Figure 5 is a subsequent part of a flow chart of the method of distributing electric power shown in Figure 4;
Figure 6 is a subsequent part of a flow chart of the method of distributing electric power shown in Figure 4;
Figure 7 is a subsequent part of a flow chart of the method of distributing electric power shown in Figure 4;
Figure 8 is a subsequent part of the flow chart of the method of distributing electric power shown in Figure 4 and Figure 7;
Figure 9 is a subsequent part of the flow chart of the method of distributing electric power shown in Figure 4, Figure 7 and Figure 8;
Figure 10 is a subsequent part of the flow chart of the method of distributing electric power shown in Figure 4;
Figure 11 is a subsequent part of the flow chart of the method of distributing electric power following the chart of Figure 10, and
Figure 12 is another subsequent part of the flow chart of the method of distributing electric power following the chart of Figure 10.

It should be noted that items which have the same reference numbers in different Figures, have the same structural features and the same functions, or are the same signals. Where the function and/or structure of such an item has been explained, there is no necessity for repeated explanation thereof in the detailed description.

### Detailed description of embodiments

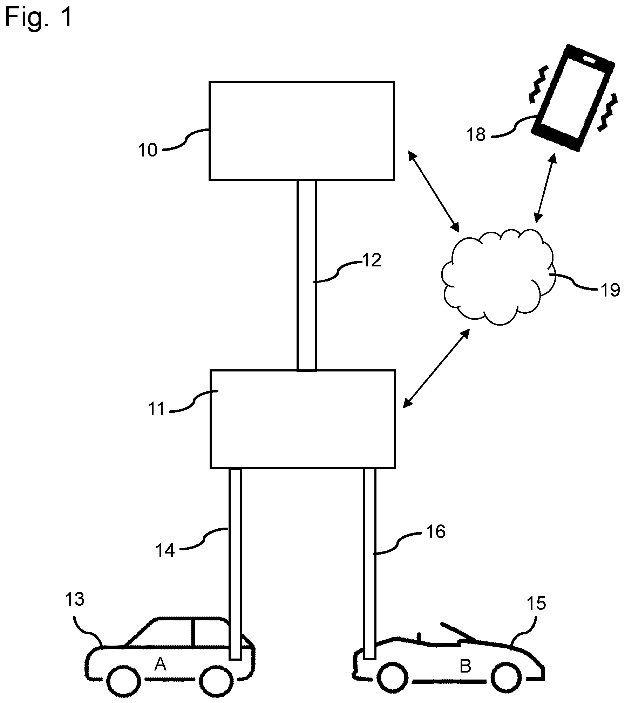

Figure 1 schematically shows a charging system 10 connected to an electric power distribution device 11 according to an embodiment of the invention. The power distribution device 11 is connected to the charging system 10 via a charging cable 12. In the example of Figure 1, the power distribution device 11 is connected to a first car 13 via a charging cable 14 and two a second electric vehicle 15 via a further charging cable 16. The car 13 is labeled as car 'A', and the car 15 is labeled as car 'B'. Also shown is a mobile device 18 to be used by a user for communicating with the power distribution device 11 and/or with the charging station 10 via a communication network 19. If multiple electric vehicles used by multiple users are present, then the power distribution device 11 and the charging station 10 may communicate with each one of multiple mobile devices 18.

It is noted that the charging cable 12, and also the charging cables 13, 15, could be removably connected to the units shown in Figure 1. So for example, charging cable 12 could be fixed to the charging system 10 while removably connected to the power distribution device 11.

The charging system 10 shown in Figure 1 may be a state-of-the-art charging system, also referred to as EVSE 10. Such an EVSE is arranged to charge a single electric vehicle. But when a distribution device such as the power distribution device 11 is added, multiple electric vehicles can be charged using one single EVSE.

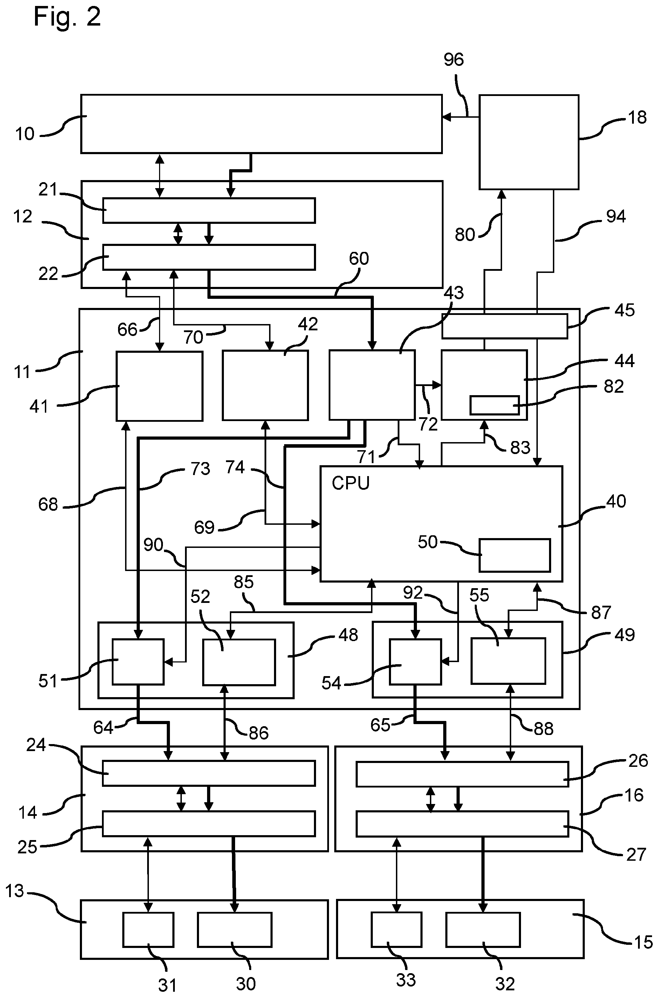

Figure 2 shows a scheme of the charging system 10, the electric power distribution device 11, the car 13 and the car 15. Furthermore, the charging cable 12 and the charging cables 14 and 16 are schematically shown. The mobile device 18 of the user is shown at the top of Figure 2. In Figure 2, relatively thick arrows indicate power lines, while the other arrows indicate signal lines.

In an embodiment, the electric power distribution device 11 is arranged in a box shaped housing and because of this, the electric power distribution device 11 is sometimes referred to as the Switchbox 11.

The charging cable 12, also referred to as the input charging cable 12, comprises an EVSE side connector 21 and a Switchbox side connector 22. The charging cable 14, also referred to as the first output charging cable 14 comprises a Switchbox side connector 24 and a vehicle side connector 25. The charging cable 16, also referred to as the second output charging cable 16, comprises of Switchbox side connector 26 add a vehicle side connector 27.

The first car 13 comprises an electric battery system 30 and a signal processing unit 31. Similarly, the second car 15 comprises an electric battery system 32 and a signal processing unit 33.

The Switchbox 11 in this embodiment comprises several processing units, some of which are shown in Figure 2. The Switchbox 11 comprises a central processing unit (CPU) 40, a proximity pilot unit 41, a control pilot unit 42, a mains measurement unit 43, and an energy calculation unit 44. Furthermore, the Switchbox 11 comprises a communication system 45, e.g. a transceiver unit 45. Also the Switchbox 11 comprises a first vehicle control unit 48 and a second vehicle control unit 49. The central processing unit 40 may comprise, and/or communicate with, a memory 50. The first vehicle control unit 48 comprises a first current switch 51 and a first signal generator 52. The second vehicle control unit 49 comprises a second current switch 54 and a second signal generator 55.

The Switchbox 11 comprises a power inlet 60 arranged for receiving electric power from the charging station 10, and multiple power outlets 64,65, each of the outlets being arranged for providing electric power to one of the electric vehicles 13,15.

The proximity pilot unit 41 is arranged to check if the charging cable 12 is connected to the Switchbox 11 by communicating with the Switchbox side connector 22 of the charging cable 12 via a signal line 66. The proximity pilot unit 41 sends a cable lock status to the CPU 40 via a signal line 68.

It is noted that the resistor(s) inside the charging cables 14,16 are read by the connected vehicle to detect how much power they can request via these cables. The Switchbox 11 is arranged to decouple these charging cables 14,16 from the cable 12 between the charging station and the Switchbox 11. In this way the resistors in the charging cables 14,16 connected to the vehicles are not affected by adding other resistances in parallel, such as a resistor in the charging cable 12. As a result, all PP signals are decoupled from one another ensuring that the electric vehicles always draw the correct charging current.

The control pilot unit 42 is arranged to receive CP (control pilot) signals from the central processing unit 40 via a signal line 69, e.g. an end-of-charge signal. It also sends and receives CP signals to and from the Switchbox side connector 22 of the charging cable 12 via a signal line 70.

The mains measurement unit 43 is arranged to receive electric power from the EVSE 10 via the charging cable 12 and the inlet 60. The mains measurement unit 43 will measure the received electric power and send the measured values to the CPU 40, see signal line 71, and to the energy calculation unit 44, see signal line 72. The electric power is led from the mains measurement unit 43 to the first and second current switches 51,54 via respective power lines 73,74.

The energy calculation unit 44 is arranged to use the received measured values from the mains measurement unit 43 in order to calculate the energy forwarded to the respective vehicles. The calculated energy values are sent to the mobile device 18 of the user by the transceiver unit 45, see also wireless communication line 80. In this embodiment the energy calculation unit 44 comprises a count unit 82 arranged to keep the time for the charging process. The mains measurement unit 43 is arranged to send a Start-counting signal to the count unit 82 via signal line 72. The CPU 40 is arranged to send a Stop-counting signal to the count unit 82 via a signal line 83.

In an embodiment, the CPU 40 is arranged to read the CP signal received from the EVSE 10 via the control pilot unit 42. The CPU 40 sends this CP signal to the first signal generator 52, see line 85. The first signal generator 52 is arranged to use this signal for generating a new CP signal which is then forwarded to the signal processing system 31 of the first vehicle 13 via the first output charging cable 14. Similarly, the second signal generator 55 is arranged to receive the CP signal from the CPU 40 and use this to generate a CP signal for the second vehicle 15.

The CPU 40, acting as the main controlling system of the Switchbox 11, is arranged to detect how many electric vehicles are connected to the multiple power outlets. Detecting how many and vehicles are connected can be achieved by sending CP signals to all outputs and detecting how many of those signals sent are modified by connected vehicles. If only one electric vehicle is connected, the CPU 40 will initiate the charging of the one electric vehicle. This may be done by sending control signals via a line 90 to the current switch 51 to close the current switch 51 so as to load the first vehicle 13, or by sending control signals via a line 92 to the current switch 54 to close the current switch 54 so as to load the second vehicle 15, depending on which of the vehicles is connected.

In an embodiment, the control pilot unit 42 is arranged to receive a control pilot signal from the charging station 10 and communicate the control pilot signal to the controlling system 40. Each of the control pilot generators 52,55 may be being arranged to communicate with the controlling system 40 and to receive the control pilot signal from the controlling system 40 and to continuously send a copy of the control pilot signal to the connected electric vehicle. The control pilot generators 52,55 may be arranged to detect a modification of the CP signal modified by the connected vehicle that is charging, the modification being an indication of the vehicle needing normal charging or forced cooling charging, wherein the modification is communicated back to the charging station by the controlling system 40 and the control pilot unit 42.

The CPU 40 is also arranged to receive priority data indicating which one of the electric vehicles must be charged first. The priority data may be received from the mobile device 18, which may be a mobile phone of one of the car owners/users, see wireless communication line 94 in Figure 2. A car owner/user may define the priority data using an application on the mobile device 18. For example, if a user, planning to use car 'B', sees in the application on the mobile phone, that both car 'A' and car 'B' are connected, that car 'A' is charging, and that car 'B' is not sufficiently charged, she may change the priority by instructing the system that car 'B' should have the highest priority, i.e. should be charged first.

It is noted that the application on the mobile device 18 may be arranged to additionally send regular instructions to the EVSE 10, see line 96, to start or stop charging.

The CPU 40 is also arranged to, if multiple electric vehicles are connected, select the one electric vehicle with the highest priority, and initiate charging of the selected electric vehicle.

Using the example described above, if car 'A' is charging, and the user changes the priority by instructing the Switchbox 11 that car 'B' should have the highest priority, the CPU 40 will select the one electric vehicle with the highest priority (i.e. car "B'), and will stop charging car 'A', and initiate charging of car 'B'.

The controlling system may be arranged to switch the charging to another vehicle if a signal from a vehicle coupled to the previously selected power outlet is received indicating that that vehicle is fully or sufficiently charged. So, if for example, car 'A' is sufficiently charged, and has the highest priority, the controlling system will stop charging car 'A', and will switch to car 'B '.

It is noted that in a further embodiment, the electric power distribution device 11 may be arranged to charge three or more electric vehicles. For example, in case three electric vehicles 'A', 'B' and 'C' may be connected to outlets of the distribution device. In such cases, the priority data may comprise information on the sequence of charging the three electric vehicles. For example, a predefined sequence is A,B,C, wherein a user may be allowed to change this into B,A,C so that car 'B' will be prioritized.

The electric power distribution device 11 may be arranged to always charge an electric vehicle at full power, i.e. the power level received from the charging station (i.e. EVSE). This will result in the fastest way of charging, and thus the minimum time needed to charge the car fully or sufficiently. A car is charged sufficiently when for example, a user has instructed the system to charge the car to 80% full and for a specified time period, such as 4 hours.

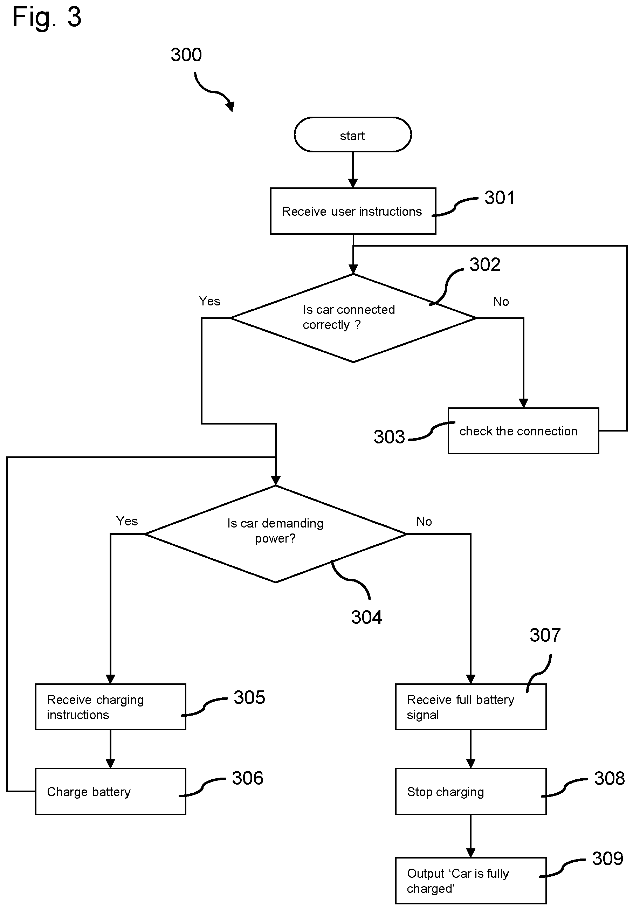

Figure 3 is a flow chart of a known method 300 of charging an electric vehicle executed by an EVSE according to the state of the art. The EVSE is arranged to charge a single vehicle. It is emphasized that the electric power distribution device 11 described above is arranged to be connected to such a state-of-the-art EVSE, without any adjustments needed within the EVSE.

The method 300 of charging starts with a step 301 where user instructions are received. In a next step 302, it is checked if the car is connected correctly. If the car is not connected correctly, a step 303 follows wherein the user is asked to check the connection to the car. If the car is connected correctly, a next step follows, see step 304, wherein it is checked if the car is demanding power. If the car is demanding power, step 305 follows in which charging instructions are received from the user, followed by charging the battery of the car, see step 306. If the car is not demanding any (more) power, step 307 follows wherein the EVSE waits to receive a full battery signal. Next, see step 308, the charging is stopped, and a car-is-fully-charged message is output to the mobile device 18 used by the driver, see step 309.

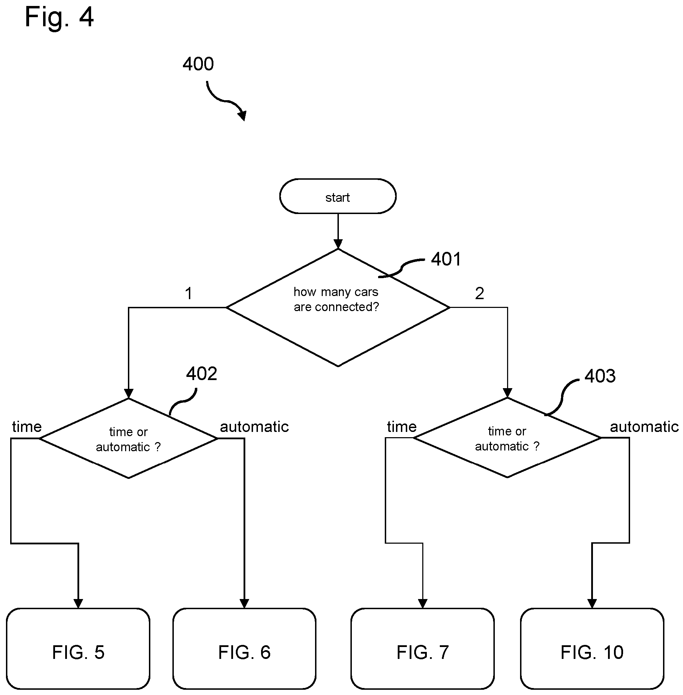

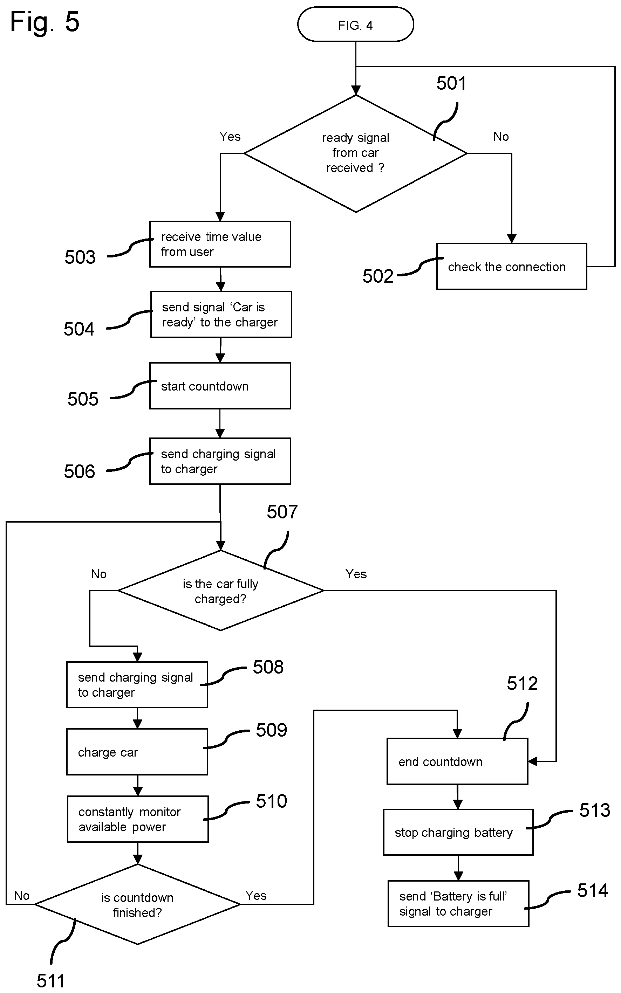

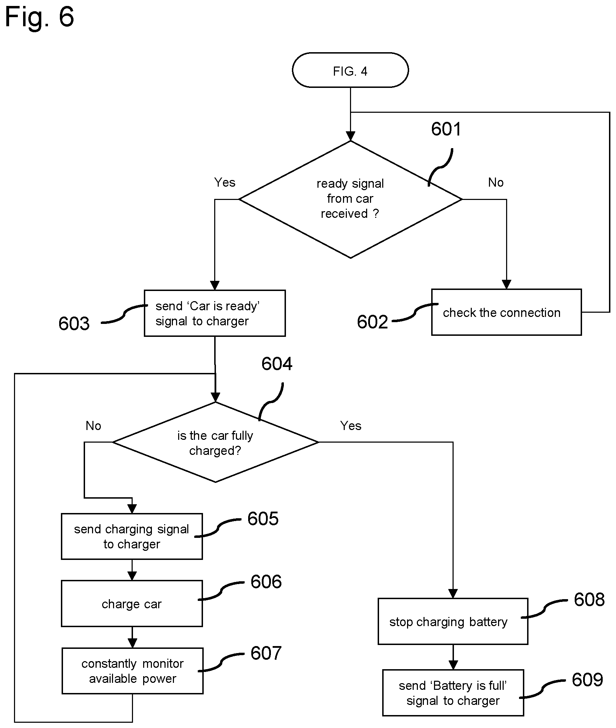

Figure 4 is a flow chart of a method 400 of distributing electric power according to an embodiment. The method starts with a step 401 wherein the number of connected cars is checked. If one car is connected, the Switchbox will further check, see step 402, if the user wants to charge the car using a time period, or if the car needs to be charged automatically. The Switchbox receives this information from the mobile device 18. If the car needs to be charged for a specific time period, the method proceeds with steps shown in a flow chart of Figure 5. If the car needs to be charged automatically, a flow chart shown in Figure 6 follows.

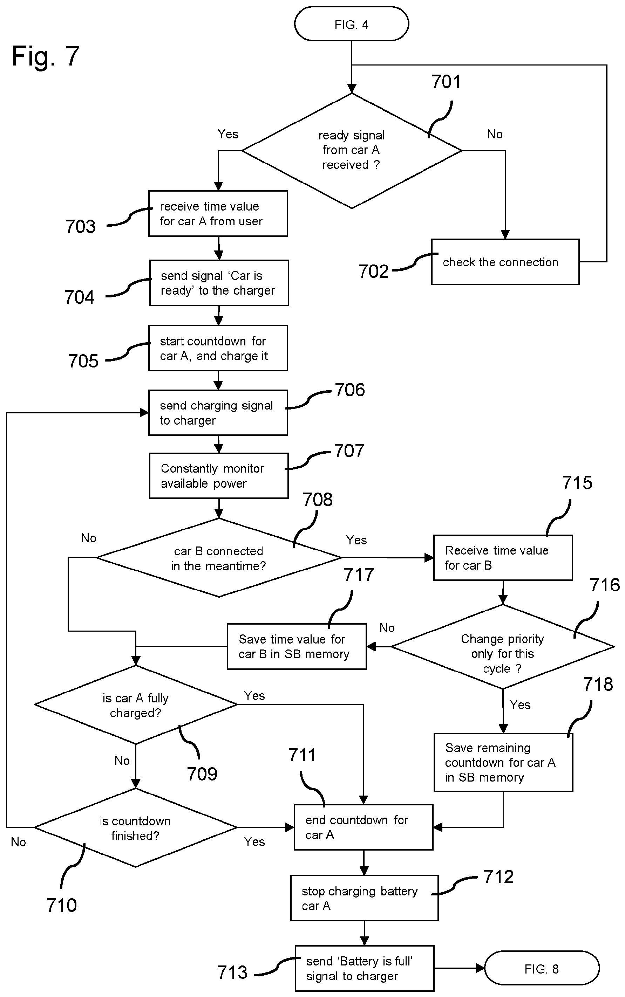

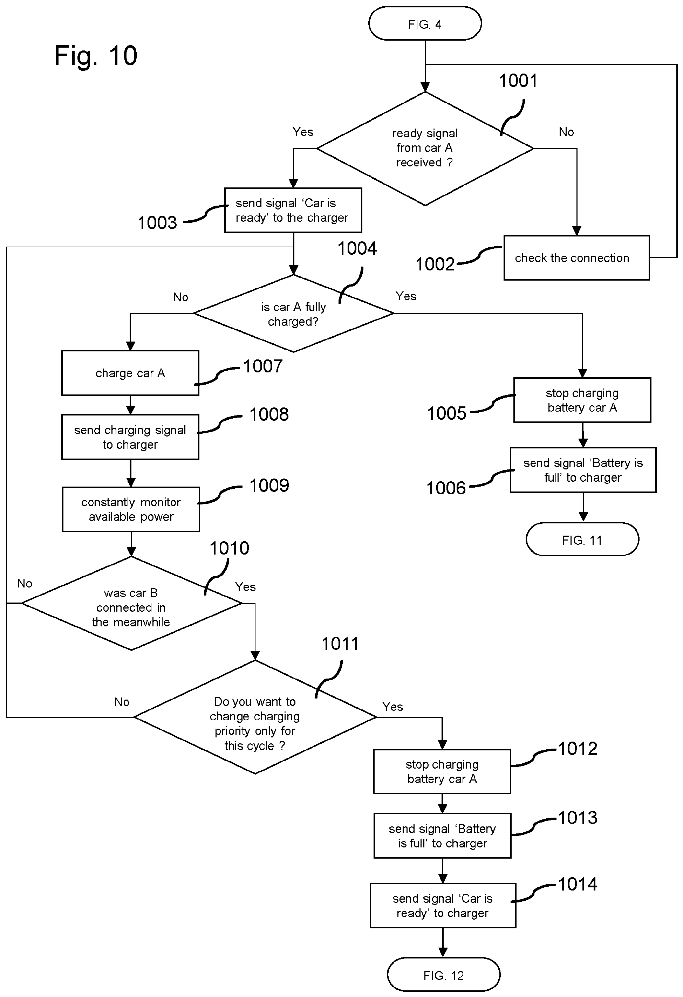

Returning to back to step 401, if two cars are connected to the Switchbox 11, it will check, see step 403, if the user wants to use a time period for charging or if the cars need to be charged automatically. If a time period is to be used, a flow chart shown in Figure 7 will follow, and if the cars need to be charged automatically, a flow chart shown in Figure 10 follows. It is noted that if car 'A' needs to be charged using a time period, while car 'B' is to be charged automatically, or vice versa, other flow charts and steps may apply, which are not further discussed.

Figure 5 is a subsequent part of a flow chart of the method 400 of distributing electric power shown in Figure 4. Figure 5 proceeds with a step 501 wherein a check is performed to see whether a Ready signal is received from the car. If no Ready signal this has been received, a step 502 follows where the user is asked to check the connection to the vehicle.

If the Ready signal is received from the car, a step 503 follows wherein the device receives a time value from the user. Next, a step 504 follows wherein a car-is-ready signal is sent to the charger, i.e. the EVSE 10. Then, in step 505, a countdown is started. In a further step 506, a charging signal is sent to the charger. It is then tested if the car is fully charged in a step 507. If the car is not fully charged, a step 508 follows wherein a charging signal is sent to the charger.

Next, the car is charged in a step 509. Step 510 represents the constant monitoring of available power. Then, in a test step 511, it is checked if the countdown has been finished. If not so, then the step 507 is executed again. If the countdown is finished, step 511 is followed by a step 512 to end the countdown. Step 512 is followed by a step 513 wherein the charging of the battery is stopped. Finally, at a step 514, a battery-is-full signal is sent to the charger. If in step 507 it is concluded that the car has been fully charged, step 512 follows to end the countdown, followed by step 513 and 514.

In the situation where the car needs to be automatically charged, see also step 402 in Figure 4, a flow chart shown in Figure 6 follows. Figure 6 starts with a check if a Ready signal from the car is received. If no Ready signal is received, a step 602 follows wherein the user is asked to check the connection to the vehicle. If a Ready signal has been received from the car, a step 603 follows wherein a car-is-ready signal is sent to the charger. Next, a test 604 is performed to see if the car is fully charged. If not so, a step 605 follows wherein a charging signal is sent to the charger followed by a step 606 wherein the car is charged, and then followed by step 607 wherein the available power is constantly monitored. Then the test step 604 is executed again.

If in step 604 it is concluded that the car has been fully charged, a step 608 follows to stop charging the battery. The method stops here with step 609 wherein a battery-is-full signal is sent to the charger.

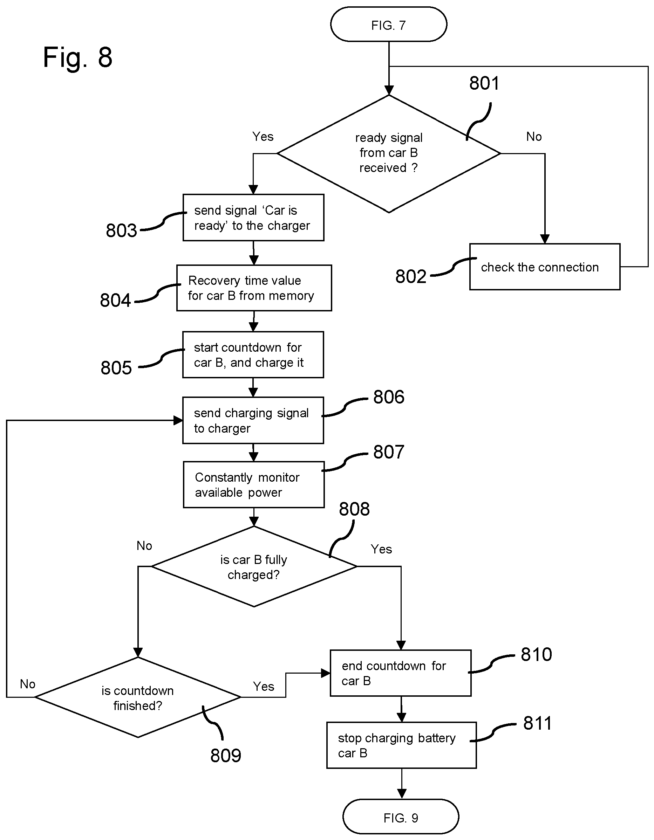

In case of two vehicles, and in case the vehicles need to be charged using a certain time period, Figure 4 is followed by the flow chart of Figure 7. Figure 7 starts with the test step 701 wherein it is checked if a Ready signal from car 'A' is received. If no Ready signal from car 'A' has been received, a step 702 follows wherein the user of car 'A' is asked to check the connection to the vehicle. If in step 701 a Ready signal from car 'A' is received, a further step 703 follows wherein time value for car 'A' is received from the user. In the next step, see step 704, a car-is-ready signal is sent to the charger. Then, in a step 705, a countdown for car 'A' starts, and car 'A' is charged. In a next step 706, a charging signal is sent to the charger. The available power is constantly monitored, see step 707. Step 707 is followed by step 708 wherein it is checked if a further car, called car 'B' has been connected in the meantime. If this is not true, a further test is performed, see test 709, to check if car 'A' is fully charged yet. If this car is not fully charged yet, it is checked in test step 710, if the countdown is finished. If the countdown is not finished, the method returns to step 706. If the countdown is finished, a step 711 follows to end the countdown for car 'A' and stop charging the battery of car 'A' in step 712, followed by steps 713 wherein a battery-is-full signal is sent to the charger, and then the flow chart proceeds with the steps shown in Figure 8.

If, in step 709, it shows that car 'A' is fully charged, step 711 is performed. If in test step 708, it is concluded that car 'B' has been connected in the meantime, the time value for car 'B' is received from the mobile device 18 in a step 715. Step 715 is followed by step 716 wherein the system checks if a priority has been changed for this charging cycle. If no priority has been changed, step 717 follows wherein the time value for car 'B' is saved in the memory 50 of the central processing unit 40.

If in test step 716 it is noted that a priority for this cycle has been changed, a step 718 follows to save the remaining countdown value for car 'A' in the Switchbox memory. Step 718 is then followed by a step 711 which has already been discussed.

Figure 8 is a subsequent part of the flow chart of the method of distributing electric power shown in Figure 4 and Figure 7. In a test step 801 it is checked if a Ready signal from car 'B' is received. If no Ready signal from car 'B' has been received, the user is asked in step 802 to check the connection with the car. If a Ready signal from car 'B' has been received, a step 803 follows wherein a car-is-ready signal is sent to the charger. Then, in a step 804, a time value for car 'B' is recovered from the memory. In a step 805, a countdown for car 'B' is started, and car 'B' is charged. Then, in a step 806, a charging signal is sent to the charger and the available power is constantly monitored in step 807.

Next, in a test step 808 it is checked if car 'B' is fully charged. If this is not true, then a test 809 follows wherein it is tested if the countdown is finished. If the countdown is not finished, step 806 is performed again. If in the test step 808, it turns out that the car 'B' is fully charged, a step 810 is performed to end the countdown for car B, and in a next step, see step 811, the charging of the battery in car 'B' is stopped. If, in test step 809, the countdown is finished, the step 810 is performed, see Figure 8.

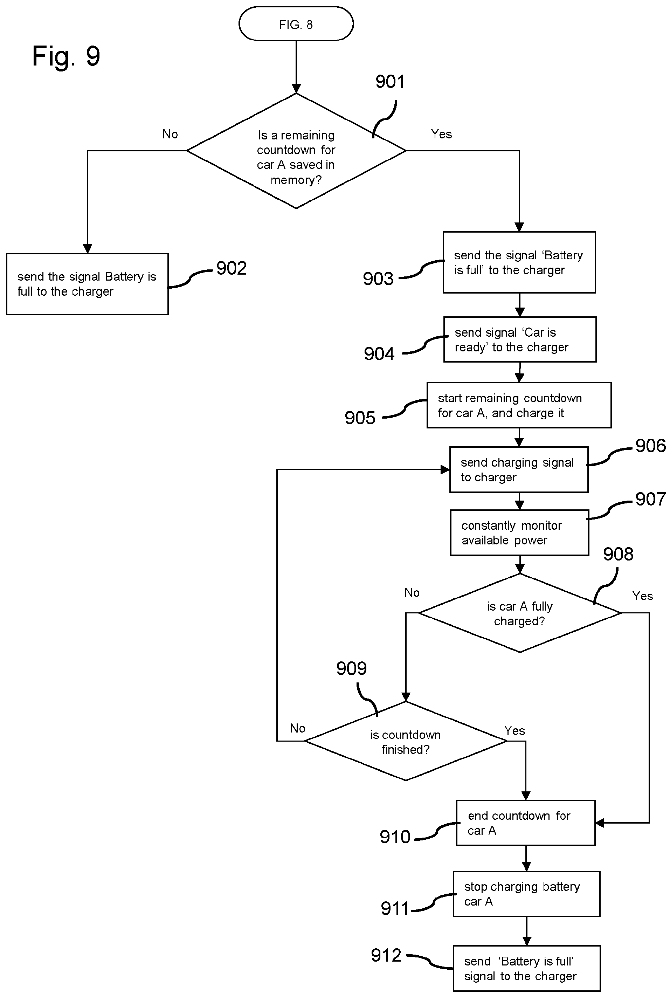

Figure 9 is a subsequent part of the flow chart of the method of distributing electric power shown in Figure 4, Figure 7 and Figure 8. Figure 9 starts with a test step 901, wherein it is checked if there is a remaining countdown saved in memory for car 'A'. If this is not the case, then a step 902 follows to send a battery-is-full signal to the charger. If the result of test 901 is YES, then a step 903 is performed wherein a battery-is-full signal is sent to the charger. Next, a step 904 is performed wherein a signal car-is-ready is sent to the charger. Then, in a step 905, the remaining countdown for car 'A' is started and car 'A' is charged. Next, in a step 906, a charging signal is sent to the charger and the available power is constantly monitored, see step 907.

Next it is tested in step 908, if car 'A' is fully charged. If this is not the case, then a test step 909 follows to check if the countdown is finished. If the countdown is not finished, the method returns to step 906. If the countdown is finished, a step 910 follows wherein the countdown for car 'A' is ended. Also, if in test step 908 it is concluded that car 'A' is fully charged, step 910 follows. After step 910 a step 911 follows wherein the charging of the battery of car 'A' is stopped, followed by step 912 wherein the battery-is-full signal is sent to the charger.

Figure 10 is a subsequent part of the flow chart of the method of distributing electric power shown in Figure 4. Figure 10 starts with a test step 1001 to check if the Ready signal from car 'A' is received. If this is not the case, a step 1002 follows to ask the user to check the connection. Then, the test step 1001 is performed again to check if the Ready signal from car 'A' is received. If the ready signal is received from car 'A', a step 1003 follows wherein a car-is-ready signal is sent to the charger. Next, in a test step 1004, it this is tested if car 'A' is fully charged. If this is true, then a step 1005 follows wherein the charging of the battery of car 'A' is stopped and, see step 1006, a battery-is-full signal is sent to the charger. If in the test step 1004 it is concluded that car 'A' is not fully charged, a step 1007 follows to charge car 'A' and a step 1008 follows to send the charging signal to the charger. Also, see step 1009, the available power is constantly monitored. And then, in a test step 1010, it is checked if in the meantime car 'B' was connected. If this is not the case, the method returns back to test step 1004. If car 'B' was connected in the meantime, a further test step 1011 follows to ask the user if she wants to change the charging priority for this charging cycle. If the answer is NO, the method returns back to the test step 1004. If the answer is YES, a step 1012 follows to stop charging the battery of car 'A' and a step 1013 follows to send battery-is-full signal to the charger. Next, in a step 1014, the car is ready signal is sent to the charger. By telling (actually fooling) the charger (i.e. the EVSE 10) that the battery is full, the charger will stop charging and the Switchbox 11 will be able to switch the current switches appropriately with no voltage applied to the inputs of the switches 51,54. In this way, the risk of electrical sparks during switching is nearly zero. This will result in a longer lifetime of the Switchbox 11.

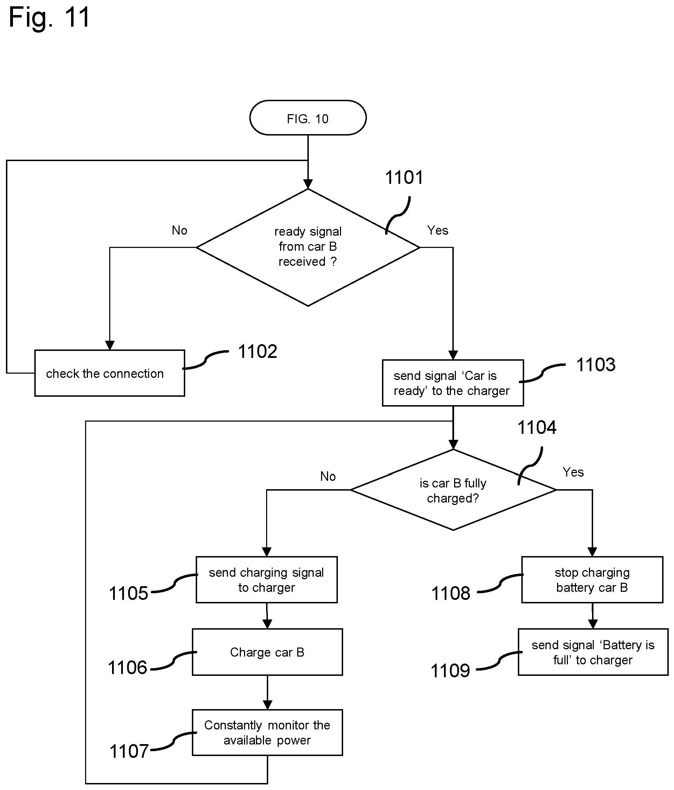

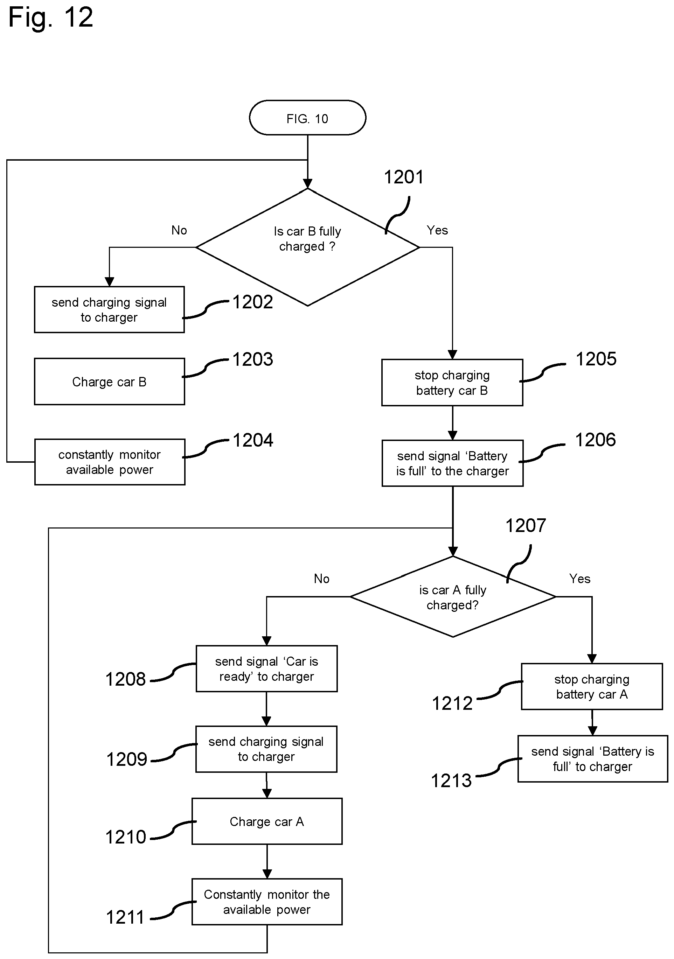

Step 1014 is followed by the steps described in Figure 12. Step 1006 is followed by the steps described in Figure 11. Figure 11 starts with a test step 1101 wherein it is tested if the car-is-ready signal is received from car 'B'. If this is not the case, a step 1102 follows to ask the user to check the connection with car 'B'. If the result of test step 1101 is YES, then a step 1103 follows wherein a car-is-ready signal is sent to the charger. Next, in a test step 1104 it is checked if the car 'B' is fully charged. If this is not true, then in a step 1105, a charging signal is sent to the charger and car 'B' is charged, see 1106. The available power of the EVSE is constantly monitored in step 1107. If in test step 1104 it is concluded that car 'B' is fully charged, a step 1108 follows to stop charging the battery of car 'B' and a signal battery-is-full is sent to the charger, see step 1109.

Figure 12 starts with a test step 1201 to check if car 'B' is fully charged. If this is not the case, a step 1202 follows to send a charging signal to the charger and charge car 'B" in step 1203. The available power is constantly monitored as well, see step 1204. If in test 1201 it shows that car 'B' is fully charged, a step 1205 follows to stop charging of the battery of car 'B' and a battery-is-full signal is sent to the charger, see 1206. Next, it is tested if car 'A' is fully charged, see test step 1207. If this is not the case, then in step 1208, a car-is-ready signal is sent to the charger and a charging signal is sent to the charger, see step 1209. Then, in a step 1210, car 'A' is charged, and the available power is constantly monitored, see step 1211. If in test step 1207 it is concluded that the car 'A' is fully charged, a step 1212 follows to stop charging of the battery of car 'A', and a step 1213 wherein the battery is full signal is sent to the charger.

## Claims

1. An electric power distribution device (11) for selectively distributing electric power to multiple electric vehicles, the device (11) comprising:
- a power inlet (60) arranged for receiving electric power from a charging station (10), wherein said charging station (10) is arranged for charging an electric vehicle (13, 15) that is connected thereto;
- multiple power outlets (64,65), each of the outlets being arranged for providing electric power to one of multiple electric vehicles (13,15);
- a controlling system (40);
- a communication system (45) arranged to receive instructions from a remote device (18), in particular user-defined priority data comprising information on the sequence of charging the multiple electric vehicles, and defining one electric vehicle with the highest priority, wherein said communication system (45) is operatively connected to the controlling system (40) for providing the instructions to the controlling system (40);
- a switching system (51,54) arranged to switch power coming from the power inlet to one of the multiple power outlets,
wherein the controlling system (40) is arranged to:
- detect how many electric vehicles are connected to the multiple power outlets;
- receive the user-defined priority data from the communication device (45);
- if only one electric vehicle is connected, select the only one connected electric vehicle;
- if multiple electric vehicles are connected, select the one electric vehicle with the highest priority;
- control the switching system (51,54) to connect the power inlet (60) to that one of the power outlets (64,65) that is connected to the selected electric vehicle;
- send a charging signal to the charging station (10) so as to initiate charging of the selected electric vehicle.

2. The electronic power distribution device according to claim 1, wherein the controlling system (40) is arranged to control the switching system (51,54) to switch the charging to the selected electric vehicle in case a currently charging electric vehicle is not the selected electric vehicle.

3. The electronic power distribution device according to claim 2, wherein the controlling system (40) is arranged to, before the charging is switched to the selected electric vehicle, initiate the sending of a control pilot signal to the charging station (10), the control pilot signal indicating to the charging station that the currently charging electric vehicle is completely or sufficiently charged.

4. The electronic power distribution device according to any one of the preceding claims, wherein the controlling system (40) is arranged for, once the electrical vehicle with the highest priority is sufficiently or completely charged, selecting the one electrical vehicle with the second highest priority and control the electric power distribution device (11) to initiate charging of the selected electric vehicle.

5. The electronic power distribution device according to any one of the preceding claims, wherein an electric vehicle is always charged at full power, i.e. the power level received from the charging station.

6. The electronic power distribution device according to any one of the preceding claims, further comprising:
- a control pilot unit (42) arranged to receive a control pilot signal from the charging station (10) and communicate the control pilot signal to the controlling system (40),
- multiple control pilot generators (52,55) each being arranged to communicate with the controlling system (40) and to receive the control pilot signal from the controlling system (40) and to continuously send a copy of the control pilot signal to the connected electric vehicle.

7. The electronic power distribution device according claim 6, wherein each of the multiple control pilot generators (52,55) is arranged to detect a modification of the CP signal modified by the connected vehicle that is charging, the modification being an indication of the vehicle needing normal charging or forced cooling charging, wherein the modification is communicated back to the charging station by the controlling system (40) and the control pilot unit (42).

8. The electronic power distribution device according to any one of the preceding claims, wherein the controlling system (40) is arranged to initiate the charging only if one or more out of a set of conditions are met, the set of conditions comprising:
- a charging request has been received from a user;
- the device is connected to the charging station;
- the selected electric vehicle is connected to the device;
- the connected electric vehicle is not completely or sufficiently charged.

9. The electronic power distribution device according to any one of the preceding claims, wherein the electronic power distribution device comprises a memory and wherein the controlling system (40) is arranged to:
- let the device charge the selected electric vehicle, for a specific time period using a counter;
- store a value of the counter into the memory if the received priority data indicates that another electric vehicle needs to be charged first;
- complete the charging of the selected electric vehicle, using the stored value of the counter once the electric vehicle with the highest priority has been charged completely or sufficiently.

10. An electric vehicle power system comprising an electric power distribution device (11) according to any one of the preceding claims, a communication network and a user input device (18), such as a mobile phone, wherein the communication system (45) is arranged to receive the instructions from the input device (18) via said communication network.

11. Method of controlling an electric power distribution device (11) for selectively distributing electric power to multiple electric vehicles, the device (11) comprising a power inlet (60) arranged for receiving electric power from a charging station (10), multiple power outlets (64,65), each of the outlets being arranged for providing electric power to one of multiple electric vehicles (13,15), a controlling system (40), and a communication system (45) arranged to receive instructions from a remote device (18), in particular user-defined priority data comprising information on the sequence of charging the multiple electric vehicles, and defining one electric vehicle with the highest priority, wherein said communication system (45) is operatively connected to the controlling system (40) for providing the instructions to the controlling system (40);
and a switching system (51,54) arranged to switch power coming from the power inlet to one of the multiple power outlets, the method comprising:
- detecting how many electric vehicles are connected to the multiple power outlets;
- receiving the user-defined priority data from the communication system (45);
- if only one electric vehicle is connected, selecting the only one connected electric vehicle;
- if multiple electric vehicles are connected, selecting the one electric vehicle with the highest priority;
- controlling the switching system (51,54) to connect the power inlet (60) to that one of the power outlets (64,65) that is connected to the selected electric vehicle;
- sending a charging signal to the charging station (10) so as to initiate charging of the selected electric vehicle.

12. A computer program product comprising instructions configured to, when loaded on processing units of an electric power distribution device according to any one of the claim 1-9, perform the method of claim 11.
